# FASCICULE DE BREVET EUROPEEN

(11) **EP 0 526 268 B1**
(45) Date de publication et mention de la délivrance du brevet: **18.10.1995**
(21) Numéro de dépôt: 92401748.6
(22) Date de dépôt: 23.06.1992
(51) Int. Cl.: G01M 3/32

(54) **Installation pour tester des fûts ou conteneurs similaires**
Anlage zum Testen von Fässern oder gleichartigen Behältern
Installation for testing of barrels or similar containers

(30) Priorité: 04.07.1991 FR 9108399
(43) Date de publication de la demande: 03.02.1993
(73) Titulaire: SOCIETE DE RENOVATION D'EMBALLAGES METALLIQUES R.E.M., F-76850 Bosc-le-Hard (FR)
(72) Inventeur: Luther, André, F-76230 Quincampoix (FR); Breard, Michel, F-76720 Auffay (FR)
(74) Mandataire: Dronne, Guy

(56) Documents cités:
- EP-A- 0 117 491
- CH-A- 671 464
- US-A- 2 784 373

## Description

La présente invention a pour objet une installation pour tester des fûts ou conteneurs similaires.

Dans la présente description, par fût il faut entendre des bidons de forme cylindrique fermés à l'une de leurs extrémités par une bonde et qui servent le plus souvent au transport de produits pétroliers, de produits chimiques, de peinture, de produits alimentaires, etc. En particulier, dans le cas où les produits transportés sont polluants ou toxiques, il est bien sûr nécessaire que ces fûts étant destinés à être manipulés lors de leur transport, il est nécessaire que ceux-ci présentent une bonne résistance mécanique. Cette résistance mécanique leur est conférée d'une part par l'épaisseur de la tôle utilisée et d'autre part par les ondulations qu'elles présentent et enfin par leur forme générale cylindrique. En outre, les deux portions planes d'extrémité du fût sont fixées sur la paroi latérale par sertissage. La bonde est soudée sur une des plaques d'extrémité. Enfin, la paroi latérale cylindrique est formée bien sûr à partir d'une tôle qui est pliée et soudée selon une génératrice.

Des tests doivent être faits sur les fûts dans deux circonstances : d'une part, après la fabrication initiale du fût et, d'autre part, après la rénovation de celui-ci. En effet, on sait qu'une proportion non négligeable des fûts utilisés sont récupérés pour être rénovés, c'est-à-dire remis dans un état proche de leur état initial afin d'en permettre une nouvelle utilisation. La rénovation du fût consiste essentiellement dans le débosselage de la paroi latérale du fût, dans la réfection des sertissages et bien sûr dans le nettoyage de l'intérieur du fût.

Comme on l'a déjà indiqué succinctement, il est bien sûr nécessaire de procéder à des tests sur le fût, notamment après sa rénovation, pour s'assurer que le fût présente les propriétés requises d'étanchéité et de résistance mécanique, en particulier au chocs extérieurs lors de sa manipulation ultérieure. Les risques de fuite apparaissent principalement dans les zones de sertissage, dans la zone de soudage de la paroi latérale, dans la région de fixation de la bonde. Les insuffisances de résistance mécanique peuvent être dues en particulier à des impacts sur la paroi cylindrique latérale qui entraînent une fragilisation locale du fût.

Une première technique utilisée jusqu'ici pour effectuer les tests d'étanchéité consiste à plonger pendant une durée très limitée un fût fermé et rempli d'air dans une cuve contenant de l'eau à une température voisine de 90°, l'apparition de bulles dans l'eau permet de détecter et de localiser une fuite. On comprend cependant qu'une telle technique est relativement aléatoire du fait qu'il existe déjà des bulles dans l'eau, compte tenu de sa température, et que cette opération est peu agréable pour celui qui est préposé à ce test.

Une autre technique consiste à ouvrir le fût et à remplir celui-ci par exemple avec de l'hélium. On détecte, après avoir refermé le fût, une fuite éventuelle d'hélium vers l'extérieur qui permettrait ainsi de détecter une absence locale d'étanchéité du fût. Une telle technique présente l'inconvénient d'utiliser de l'hélium qui est relativement onéreux et de nécessiter l'ouverture et la fermeture du fût, ce qui est difficile à mettre en oeuvre dans une chaîne entièrement automatisée de test des fûts. De plus, ce type de test ne permet nullement de tester la résistance mécanique du fût par rapport à des chocs externes. Il en va d'ailleurs de même dans le cas du test décrit précédemment.

Le document CH-A-671 464 décrit un principe de détection de fuite dans un conteneur dans lequel on enferme le conteneur dans une enceinte étanche alimente en gaz sous pression. Cependant, ce document ne donne aucun moyen pour réaliser ce test de façon automatique.

Pour remédier à ces inconvénients, un objet de la présente invention est de fournir une installation de tests pour fûts ou conteneurs analogues, qui permette simultanément de tester l'étanchéité du fût et sa résistance mécanique vis-à-vis de chocs extérieurs, tout en étant bien adaptée à une automatisation.

Pour atteindre ce but, l'installation pour tester des fûts ou conteneurs analogues se caractérise en ce qu'elle comprenant :
- une enceinte étanche apte à recevoir un fût fermé à tester, ladite enceinte étant constituée par deux parties déplaçables l'une par rapport à l'autre ;
- des moyens pour introduire ledit fût dans ladite enceinte,
- des moyens pour déplacer indépendamment chacune desdites parties entre une position écartée permettant l'introduction ou la sortie d'un fût à tester et une position fermée dans laquelle les deux parties sont réunies de façon étanche ;
- des moyens pour introduire dans ladite enceinte, à l'extérieur dudit fût, un gaz sous une pression et un volume sensiblement prédéterminés ;
- des moyens pour mesurer la pression P1 du gaz à un instant prédéterminé t1 ;
- des moyens pour mesurer la pression P2 du gaz à un deuxième instant prédéterminé t2, postérieur à l'instant t1 ; et
- des moyens pour comparer les première et deuxième pressions mesurées P1 et P2 et pour élaborer un signal d'alarme si la différence entre les pressions P1 et P2 est supérieure à une valeur prédéterminée.

D'autres caractéristiques et avantages de la présente invention apparaîtront mieux à la lecture de la description qui suit d'un mode préféré de réalisation de l'invention donné à titre d'exemple non limitatif. La description se réfère aux dessins annexés sur lesquels :
- la figure 1 est une vue en élévation de l'installation de test de fûts ;
- la figure 2 est une vue de côté en coupe selon la ligne II-II de la figure 1 de l'installation de test ;
- la figure 3 est une vue partielle d'une demi-coquille formant l'enceinte de test et montrant son joint d'étanchéité ;
- la figure 4 est une vue en coupe partielle de la figure 3 selon la ligne IV-IV de celle-ci ; et
- les schémas 5a à 5d illustrent les différentes phases du test d'un fût à l'aide de l'installation de test conforme à l'invention.

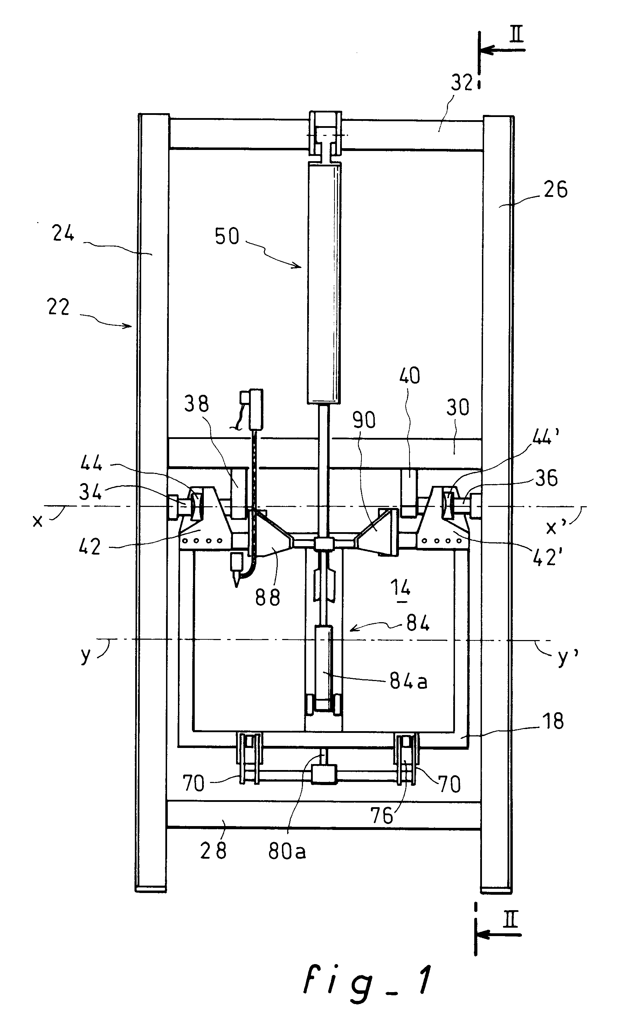

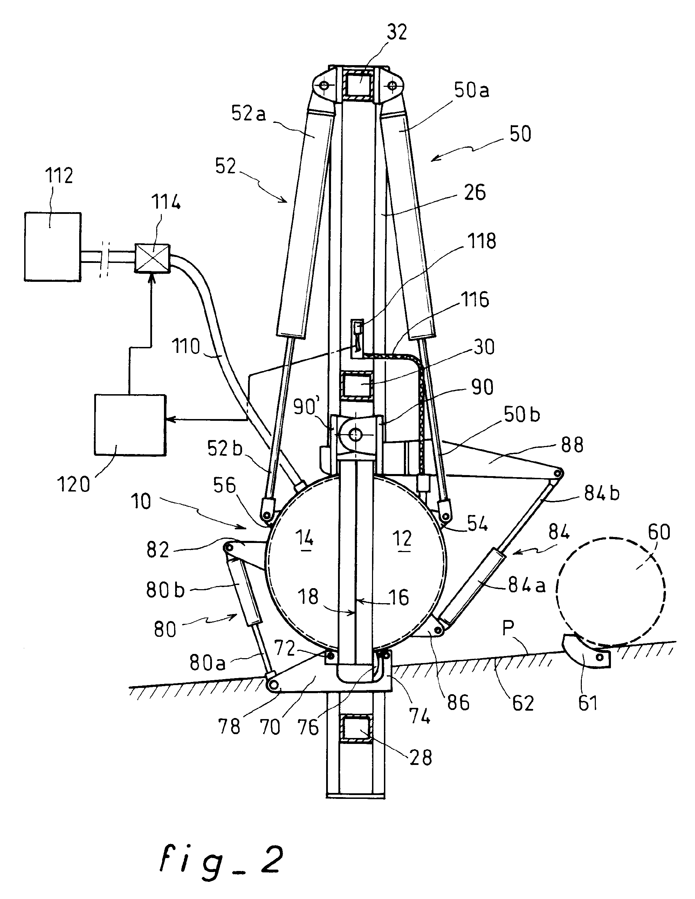

En se référant tout d'abord aux figures 1 et 2, on va décrire l'ensemble de l'installation de test de fûts.

L'installation de test comprend essentiellement une enceinte étanche 10 de forme cylindrique. L'enceinte étanche 10 est constituée par deux demi-coquilles 12 et 14 de forme semi-cylindrique. La juxtaposition des coquilles 12 et 14 mises en contact par leur bords d'étanchéité 16 et 18 réalise ainsi une enceinte étanche cylindrique. Chaque demi-coquille 12 et 14 est montée autour d'un axe xx′ qui est parallèle à l'axe yy′ de l'enceinte cylindrique 10 et horizontal. L'axe de pivotement xx′ est disposé bien sûr à l'extérieur du cylindre 10. Les deux demi-coquilles 12 et 14 sont montées sur un châssis 22 qui est essentiellement constitué par deux montants verticaux 24 et 26 et par des traverses horizontales telles que 28, 30 et 32. L'axe de pivotement xx′ des demi-coquilles 12 et 14 est constitué par deux portions d'arbre 34 et 36 horizontaux qui sont alignées et qui sont, d'une part, solidaire des montants verticaux, respectivement 24 et 26, et, d'autre part, engagés dans des éléments de supportage 38 et 40 soudés par exemple sur le montant 30. Chaque demi-coquille est solidaire de deux oreilles 42, 42′ et 44, 44′ munies chacune d'un alésage permettant d'engager les oreilles 42 et 44 sur les demi-arbres 34 et 36. On comprend qu'ainsi chaque demi-coquille 12 et 14 peut effectivement pivoter autour de l'axe xx′ matérialisé par les demi-arbres 34 et 36.

Le relèvement de chaque demi-coquille 12 et 14 par pivotement autour de l'axe commun xx′ est obtenu à l'aide de deux vérins hydrauliques ou pneumatiques, respectivement référencés 50 et 52. Le vérin 50 comporte un corps de vérin 50a dont une extrémité est articulée sur la traverse supérieure du bâti 32 et une tige de vérin 50b dont l'extrémité inférieure est articulée sur une oreille 54 solidaire de la face externe de la demi-coquille 14. De la même manière, le vérin 52 comporte un corps de vérin 52a articulé sur la traverse supérieure 32 et une tige de vérin 52b articulée sur une oreille 56 soudée sur la face externe de la demi-coquille 12. On peut ainsi, en commandant alternativement le vérin 50 et le vérin 52, provoquer l'ouverture de l'enceinte 10 par soulèvement de la demi-coquille 12 ou de la demi-coquille 14. Sur la figure 2, on a représenté de façon symbolique en pointillés un fût 60 à tester qui est mis en place sur le système de transfert des fûts 62 consistant essentiellement en un plan incliné P. On comprend dès à présent qu'en soulevant la demi-coquille 14 on permettra au fût 60 de pénétrer dans l'enceinte 10 qui est reconstituée par la fermeture de la demi-coquille 14. De la même manière, en provoquant le soulèvement de la demi-coquille 12, on permettra la sortie du fût 60 après que celui-ci ait été testé dans l'enceinte cylindrique 10.

On comprend bien sûr que, lorsque les deux demi-coquilles, sont dans leur position de repos, c'est-à-dire que leur face d'étanchéité 16 et 18 sont en contact l'une sur l'autre, il est nécessaire de prévoir des moyens de serrage de ces deux faces d'étanchéité pour assurer une résistance à la pression convenable.

Les moyens de serrage inférieurs sont constitués par un levier 70 monté pivotant autour d'un axe 72 solidaire de la face d'étanchéité 16 de la demi-coquille 12. Ce levier présente à une première extrémité une mâchoire 74 qui peut coopérer avec une came 76 solidaire de la face d'étanchéité 18 de la demi-coquille 14. L'autre extrémité 78 du levier 70 est solidaire de l'extrémité d'une tige 80a d'un vérin pneumatique ou hydraulique 80. Le corps 80b du vérin 80 est articulé sur une oreille 82 soudée sur la face externe de la demi-coquille 12. On comprend que lorsque la tige du vérin 80a est rentrée, le levier 70 pivote autour de son axe 72 provoquant l'abaissement de la mâchoire 74. Dans cette position, les deux demi-coquilles ne sont pas serrées l'une sur l'autre. Au contraire, lorsqu'on commande la sortie de la tige 80a du vérin, le levier 70 pivote et l'extrémité de la mâchoire 74 agit sur la came 76 de la demi-coquille 14 pour provoquer le serrage de celle-ci sur la demi-coquille 12.

Comme on le voit mieux sur la figure 2, le vérin 80 commande en fait simultanément deux leviers tels que 70 décalés selon le sens de la longueur de l'enceinte 10. Le système de verrouillage supérieur est également commandé par un vérin hydraulique ou pneumatique 84 dont le corps 84a est monté pivotant sur une oreille 86 solidaire de la face externe de la demi-coquille 14. La tige 84b du vérin 84 est articulée à l'extrémité d'un levier 88 qui commande le serrage de deux mâchoires 90, 90′ sous l'effet des déplacements de la tige 84b du vérin 84.

On comprend que l'on a décrit jusqu'ici l'ensemble de l'organisation mécanique de l'installation de test qui permet de commander l'ouverture ou la fermeture de chacune des demi-coquilles 12 et 14 afin de permettre l'admission ou l'évacuation d'un fût attesté, ainsi que le serrage des deux demi-coquilles 12 et 14 l'une sur l'autre pour assurer l'étanchéité.

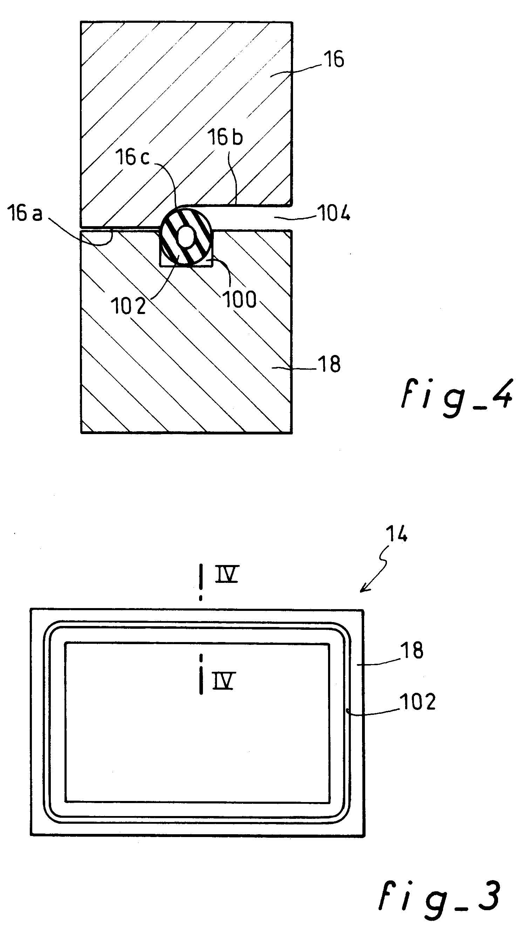

Les figures 3 et 4 montrent plus en détail la façon dont on réalise l'étanchéité entre les deux demi-coquilles. Par exemple, sur la figure 3, on a représenté en vue de face le bord d'étanchéité 18 de la demi-coquille 14. Ce bord a une forme générale rectangulaire. Comme le montre mieux la figure 4, une rainure de forme générale rectangulaire arrondie dans les "coins" et référencée 100 fait tout le tour de la surface d'étanchéité 18. A l'intérieur de cette rainure est monté un joint d'étanchéité 102 en caoutchouc creux qui est serré à l'intérieur de la rainure 100 pour assurer son maintien en place. Si l'on considère maintenant la surface d'étanchéité 16 de la demi-coquille 12, on voit que celle-ci comporte une partie 16a qui vient en regard immédiatement de la face d'étanchéité 18 et une partie 16b en retrait par rapport à la portion 18. Les deux portions de surface 16a et 16b sont raccordées par une zone torique 16c. On comprend qu'ainsi le joint d'étanchéité 102 est serré entre les bords d'étanchéité 16 et 18. Cependant, grâce à l'espace 104 ménagé par la portion en retrait 16b du bord d'étanchéité 16, une partie de la surface externe du joint 102 est en contact avec l'intérieur de la cavité définie par l'enceinte 10 et donc soumis à la pression qui y règne. Cette pression accroît l'étanchéité entre les surfaces d'étanchéité 16 et 18 lorsque l'air sous pression est introduit dans la cavité 10.

On va maintenant décrire la partie de l'installation qui permet l'introduction du gaz sous pression qui est de préférence de l'air sous pression à l'intérieur de l'enceinte 10 afin de réaliser les tests. La demi-coquille 12 est munie d'une canalisation 110 d'introduction de l'air sous pression. La demi-coquille 14 comporte également une telle conduite qui n'est pas représentée sur les figures. La conduite 110 est reliée à une source d'air sous pression 112 par l'intermédiaire d'une électrovanne 114. On comprend qu'ainsi, à partir de la source d'air sous pression 112 et de l'électrovanne 114, on peut commander l'admission d'un volume sensiblement prédéterminé d'air dans l'enceinte 10 sous une pression également sensiblement prédéterminée en contrôlant le temps pendant lequel l'électrovanne 114 reste ouverte.

L'installation de test comprend également des moyens pour mesurer en permanence la pression de gaz à l'intérieur de l'enceinte 10. Pour celà, il est prévu une conduite 116 de prélèvement de pression à l'intérieur de l'enceinte 10 reliée à une jauge de pression 118 qui est, par exemple, du type piezo-résistif. L'ensemble de l'installation est contrôlé par un système de commande centralisée 120 qui permet de commander l'ouverture et la fermeture de l'électrovanne 114 et qui reçoit l'information de pression délivrée par la jauge de pression 118 sur son entrée 122. L'unité de commande 120 contrôle également l'alimentation des vérins d'ouverture et de fermeture 50 et 52 ainsi que la commande des vérins 80 et 84 de serrage. Le centre de commande 120 peut donc ainsi piloter l'ensemble des opérations de test d'un fût tel que le fût 60 qui se présente sur la rampe inclinée 62 de transfert de fûts.

Le fût à tester 60 est maintenu dans une position d'attente, par exemple par des cales escamotables 61, ces cales étant elles-mêmes comandées par des moteurs contrôlés eux-mêmes par l'unité centrale 120.

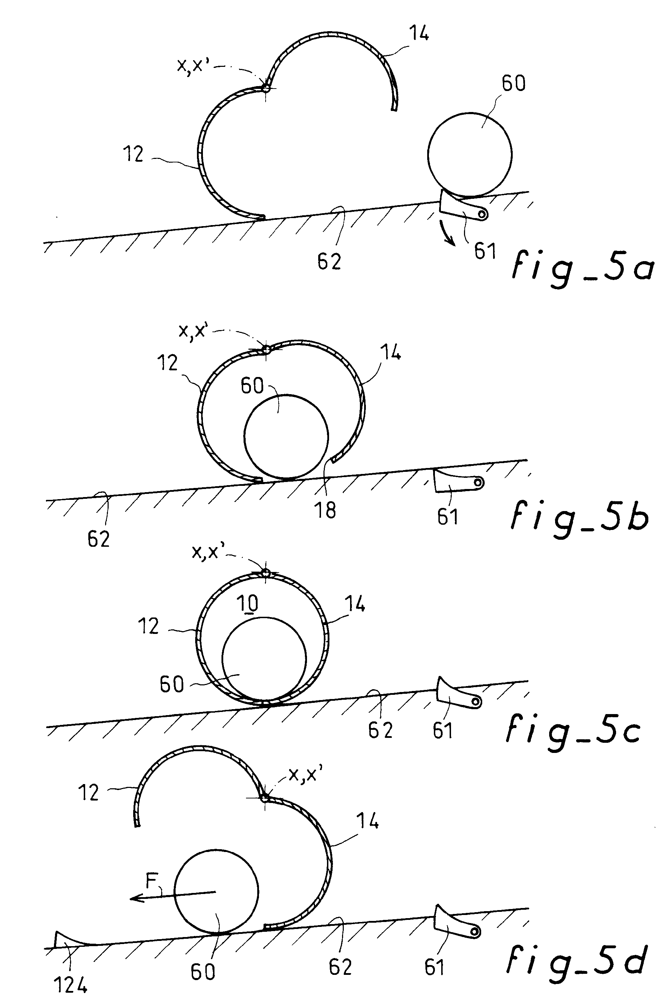

En se référant maintenant plus particulièrement aux schémas des figures 5a à 5d, on va décrire les différentes opérations permettant de tester un fût. Sur ces figures, on a représenté de façon très simplifiée un fût 60 placé sur l'air de transfert 62 qui est légèrement inclinée par rapport à l'horizontale vers l'enceinte de test 10 constituée par les demi-coquilles 12 et 14. Pour faciliter la compréhension, on a représenté sur ces figures seulement les demi-coquilles sans les organes mécaniques permettant de commander leur ouverture et leur fermeture et les organes permettant d'assurer leur serrage. Le fût 60 à tester est en position d'attente sur la rampe inclinée 62 et retenu par la cale escamotable 61 qui est en position sortie. Dans un premier temps, l'unité centrale 120 commande les vérins 80 et 84 pour déverrouiller les deux demi-coquilles 12 et 14 puis il commande le vérin 50 pour amener la demi-coquille 14 en position haute, comme cela est représenté sur la figure 5a. Puis l'unité 120 commande l'escamotage de la cale 61. Le fût 60 par son propre poids roule sur la rampe inclinée 62 jusqu'à ce qu'il arrive partiellement à l'intérieur de la demi-coquille 12. On commande alors le vérin 50 pour provoquer l'abaissement par pivotement de la demi-coquille 14. Le bord 18 de la demi-coquille 14 en se refermant entraîne le fût 60 à l'intérieur de la demi-coquille 12 et de la demi-coquille 14. A la fin de cette phase, les deux demi-coquilles sont serrées l'une contre l'autre pour constituer l'enceinte de test 10. On commande alors les vérins 80 et 84 pour assurer le serrage des deux demi-coquilles l'une sur l'autre. C'est ce que l'on a représenté sur la figure 5c. Dans cette position, on comprend que le fût 60 a été mis en place automatiquement à l'intérieur de l'enceinte de test 10 constitué par les demi-coquilles 12 et 14.

On commande alors l'ouverture de l'électrovanne 114 pour permettre l'entrée de l'air sous pression à l'intérieur de l'enceinte 10 et, comme on l'a déjà expliqué, à l'extérieur du fût 60 qui est fermé et lui-même rempli d'air à la pression atmosphérique. Au bout d'un temps prédéterminé, l'électrovanne 114 est fermée. Cela permet l'introduction dans l'enceinte 10 d'un volume de gaz sensiblement prédéterminé sous une pression également prédéterminée qui est par exemple de l'ordre de 20 kPa, qui pourrait également être de l'ordre de 30 kPa. On comprend que la pression précise régnant dans l'enceinte 10 dépend notamment du volume exact du fût 60 à tester, ce volume selon les cas pouvant être de 217 litres ou de 225 litres et cette pression dépend également de l'état extérieur du fût. A un instant t1, on effectue une première prise de mesure de pression à l'intérieur de l'enceinte 10 par l'intermédiaire de la jauge de pression 118. On obtient ainsi une première mesure de pression initiale P1. Le temps s'écoulant entre l'instant t1 et la fermeture de l'électrovanne 114 est déterminé pour que la pression se soit stabilisée à l'intérieur de l'enceinte 10. A un instant t2 séparé de l'instant t1 par exemple par une durée égale à 25 secondes, on effectue une deuxième mesure de pression à l'aide de la jauge 118, ce qui donne une deuxième mesure P2 de pression qui est transmise à l'unité centrale 120. L'unité centrale calcule alors la différence entre les deux pressions mesurées P1 et P2. Si cette différence est inférieure à une valeur déterminée P, c'est que le fût est bon. Au contraire, si la différence de pression P2-P1 est supérieure à la valeur P, c'est que le fût est à rejeter, soit qu'il présente des fuites, soit qu'il présente une résistance mécanique insuffisante.

On comprend en effet que si le fût présente une fuite même de dimensions très réduites, la différence de pression entre l'intérieur et l'extérieur du fût fait qu'une partie du gaz à l'extérieur du fût pénètre à l'intérieur de celui-ci et, en conséquence, la pression mesurée à l'instant t2 est significativement inférieure à la pression P1 mesurée initialement. Il est possible de régler la valeur de comparaison P de telle manière que même des fuites de très faible importance, par exemple de l'ordre de 1/10 de mm, puisse être détectée à l'instant t2.

On comprend également que si la paroi latérale du fût présente des points de faiblesse mécanique, la surpression appliquée du fût va entraîner une déformation importante de cette paroi latérale du fût. Il s'ensuit que le volume à l'intérieur de l'enceinte 10 laissé par le fût déformé 60 augmente, ce qui entraîne bien sûr une diminution de pression correspondante dans l'enceinte 10. La détection de cette chute de pression permet d'en déduire que le fût est à rejeter.

Lorsque ce test a été effectué, l'unité centrale 120 commande les vérins de verrouillage 80 et 84 puis le vérin 52 pour commander le soulèvement de la demi-coquille 12 comme cela est représenté sur la figure 5d. Du fait de l'inclinaison de la rampe 62, le fût 60 sous l'effet de son propre poids sort de la demi-coquille 14 et arrive en butée contre une cale 124. Le fût 60 est alors repris par un système de convoyage muni d'un aiguillage pour emmener le fût testé, soit vers une aire de stockage des fûts à rejeter, soit vers une aire de stockage des fûts qui sont corrects.

On comprend que, dans la description précédente, on a envisagé le cas d'une installation de test comportant une seule enceinte de test 10. Il va de soi que dans une installation complète on aurait une pluralité d'enceintes 10 montées sur un bâti commun, ces enceintes de test montées en parallèle pouvant être alimentées en fûts par un même convoyeur et étant contrôlées par la même unité de contrôle 120.

Il découle de la description précédente que le procédé de test, selon l'invention, présente de nombreux avantages par rapport à ceux de l'état de la technique. En particulier, le test permet de détecter aussi bien des fûts présentant des fuites, que des fûts présentant des déformations susceptibles d'entraîner une fragilité mécanique. En outre, le test étant effectué sur des fûts fermés, l'installation de test n'a pas besoin de comporter de moyens mécaniques pour l'ouverture et la fermeture des bondes des fûts.

En ce qui concerne le mode particulier de réalisation de l'installation de test, on comprend aisément que l'organisation particulière de l'enceinte cylindrique de test 10 facilite considérablement l'introduction du fût dans l'enceinte de test et son extraction après que le test ait été pratiqué. En outre, la manipulation des fûts pour l'opération de test est réalisée sans moyen particulier de manutention, ce qui permet de réduire très sensiblement le coût de l'installation de test et de plus de s'affranchir de tous les problèmes de panne éventuelle inhérente à une installation de transfert complexe.

## Revendications

1. Installation pour tester des fûts ou conteneurs analogues, comprenant :
- une enceinte (10) étanche apte à recevoir un fût (60) fermé à tester, ladite enceinte (10) étant constituée par deux parties (12, 14) déplaçables l'une par rapport à l'autre ;
- des moyens pour introduire ledit fût dans ladite enceinte,
- des moyens (50, 52) pour déplacer indépendamment chacune desdites parties entre une position écartée permettant l'introduction ou la sortie d'un fût à tester (60) et une position fermée dans laquelle les deux parties sont réunies de façon étanche ;
- des moyens (112, 114) pour introduire dans ladite enceinte, à l'extérieur dudit fût, un gaz sous une pression et un volume sensiblement prédéterminés ;
- des moyens (118, 120) pour mesurer la pression P1 du gaz à un instant prédéterminé t1 ;
- des moyens (118, 120) pour mesurer la pression P2 du gaz à un deuxième instant prédéterminé t2, postérieur à l'instant t1 ; et
- des moyens (120) pour comparer les première et deuxième pressions mesurées P1 et P2 et pour élaborer un signal d'alarme si la différence entre les pressions P1 et P2 est supérieure à une valeur prédéterminée.

2. Installation selon la revendication 1, caractérisée en ce que chaque partie (12, 14) de l'enceinte (10) a une forme semi-cylindrique et en ce que le déplacement indépendant de chacune desdites parties consiste en une rotation autour d'un axe (xx') extérieur à ladite enceinte cylindrique et parallèle à l'axe de ladite enceinte cylindrique (10).

3. Installation selon la revendication 2, caractérisée en ce que chaque partie (12, 14) de l'enceinte comporte une face de contact (16, 18) et en ce que ladite installation comporte en outre des moyens de verrouillage (70, 88) pour maintenir l'une contre l'autre lesdites faces de contact lorsque lesdites parties de l'enceinte sont en position fermée.

4. Installation selon l'une quelconque des revendications 1 à 3, caractérisée en ce qu'elle comprend en outre des moyens de transfert pour introduire un fût (60) dans ladite enceinte, lesdits moyens comprenant une rampe inclinée (62) dont la partie supérieure constitue la zone d'introduction et la partie inférieure de la zone de réception, ledit axe de rotation (xx′) étant horizontal.

5. Installation selon la revendication 4, caractérisée en ce que, lors de l'introduction d'un fût (60) dans ladite enceinte (10), une des parties (14) de ladite enceinte est capable d'entraîner ledit fût depuis ladite rampe inclinée (62) jusque dans ladite enceinte résultant de la fermeture de ladite partie d'enceinte (14).

6. Installation selon l'une quelconque des revendications 1 à 5, caractérisée en ce que les instants t1 et t2 interviennent respectivement sensiblement 3 secondes et 28 secondes après l'admission du gaz sous pression dans ladite enceinte.

## Patentansprüche

1. Anlage zum Testen von Fässern oder gleichartigen Behältern, die aufweist:
- einen dichten Raum (10), der ein zu testendes, geschlossenes Faß (60) aufnehmen kann, wobei der Raum (10) aus zwei zueinander verlagerbaren Teilen (12, 14) gebildet ist;
- Mittel zum Einführen des Fasses in den Raum;
- Mittel (50, 52) zum unabhängigen Verlagern jedes der beiden Teile zwischen einer getrennten Position, die das Einführen oder Herausnehmen eines zu testendes Fasses (60) gestattet, und einer geschlossenen Position, in der die beiden Teile dicht miteinander verbunden sind;
- Mittel (112, 114) zum Einführen in den Raum, außerhalb des Fasses, eines Gases unter einem im wesentlichen vorbestimmten Druck und Volumen;
- Mittel (118, 120) zum Messen des Druckes P1 des Gases zu einem vorbestimmten Zeitpunkt t1;
- Mittel (118, 120) zum Messen des Druckes P2 des Gases zu einem zweiten vorbestimmten Zeitpunkt t2, der nach dem Zeitpunkt t1 liegt; und
- Mittel (120) zum Vergleichen des ersten und zweiten gemessenen Druckes P1 und P2 und zum Abgeben eines Alarmsignals, wenn der Unterschied zwischen den Drücken P1 und P2 größer als ein vorbestimmter Wert ist.

2. Anlage nach Anspruch 1, dadurch gekennzeichnet, daß jedes Teil (12, 14) des Raums (10) eine halbzylindrische Form aufweist, und daß das unabhängige Verlagern jedes der Teile in einer Drehung um eine Achse (xx′), die außerhalb des zylindrischen Raums und parallel zur Achse des zylindrischen Raums (10) verläuft, besteht.

3. Anlage nach Anspruch 2, dadurch gekennzeichnet, daß jedes Teil (12, 14) des Raums eine Kontaktseite (16, 18) aufweist, und daß die Anlage außerdem Verriegelungsmittel (70, 88) aufweist, um die Kontaktseiten gegeneinander zu halten, wenn die Teile des Raums in geschlossener Position sind.

4. Anlage nach einem der Ansprüche 1 bis 3, dadurch gekennzeichnet, daß sie außerdem Übertragungsmittel zum Einführen eines Fasses (60) in den Raum aufweist, wobei die Mittel eine geneigte Rampe (62) aufweisen, deren oberes Teil die Einführungszone und das untere Teil die Aufnahmezone bildet, wobei die Drehachse (xx′) horizontal ist.

5. Anlage nach Anspruch 4, dadurch gekennzeichnet, daß beim Einführen eines Fasses (60) in den Raum (10) eines der Teile (14) des Raums das Faß von der geneigten Rampe (62) bis in den Raum führen kann, der aus dem Schließen des Teiles des Raums (14) resultiert.

6. Anlage nach einem der Ansprüche 1 bis 5, dadurch gekennzeichnet, daß die Zeitpunkte t1 und t2 im wesentlichen 3 Sekunden bzw. 28 Sekunden nach dem Einlassen des Gases unter Druck in den Raum eintreten.

## Claims

1. Installation for testing barrels or similar containers, comprising:
- a sealed enclosure (10) adapted to receive a closed barrel (60) to be tested, the said enclosure (10) consisting of two parts (12, 14) displaceable relative to one another;
- means for introducing the said barrel into the said enclosure;
- means (50, 52) for displacing each of the said parts independently between a spaced apart position allowing for the introduction or removal of a barrel (60) to be tested and a closed position in which the two parts are joined together in a sealed manner;
- means (112, 114) for introducing a gas under a substantially predetermined pressure and in a substantially predetermined volume into the said enclosure to the exterior of the said barrel;
- means (118, 120) for measuring the pressure P1 of the gas at a predetermined time t1;
- means (118, 120) for measuring the pressure P2 of the gas at a second predetermined time t2, later than the time t1, and
- means (120) for comparing the first and the second pressures P1 and P2 measured and for generating an alarm signal if the difference between the pressures P1 and P2 is greater than a predetermined value.

2. Installation according to claim 1, characterised in that each part (12, 14) of the enclosure (10) is semi-cylindrical and in that the independent displacement of each of the said parts consists in rotating it about an axis (xx′) exterior to the said cylindrical enclosure and parallel to the axis of the said cylindrical enclosure (10).

3. Installation according to claim 2, characterised in that each part (12, 14) of the enclosure includes a contact face (16, 18) and in that the said installation moreover includes locking means (70, 88) for holding one of the said contact faces against the other when the said parts of the enclosure are in the closed position.

4. Installation according to any one of claims 1 to 3, characterised in that it moreover comprises transfer means for introducing a barrel (60) into the said enclosure, the said means comprising an inclined ramp (62) the upper part of which forms the introduction zone and the lower part the receiving zone, the said axis of rotation (xx′) being horizontal.

5. Installation according to claim 4, characterised in that, when a barrel (60) is introduced into the said enclosure (10), one of the parts (14) of the said enclosure is capable of moving the said barrel from the said inclined ramp (62) into the said enclosure resulting from the closure of the said enclosure part (14).

6. Installation according to any one of claims 1 to 5, characterised in that the times t1 and t2 are substantially 3 seconds and 28 seconds respectively after the pressurised gas is admitted into the said enclosure.
